# EUROPÄISCHE PATENTSCHRIFT

(11) **EP 1 721 057 B1**
(45) Veröffentlichungstag und Bekanntmachung des Hinweises auf die Patenterteilung: **17.03.2010**
(21) Anmeldenummer: 05700837.7
(22) Anmeldetag: 12.01.2005
(51) Int. Cl.: E06B 3/67, E04C 2/54, E04B 1/80, B32B 17/06

(54) **HOCHWÄRMEDÄMMENDE ISOLIERVERGLASUNG**
HIGH-TEMPERATURE INSULATING GLAZING
VITRAGE ISOLANT TRES CALORIFUGE

(30) Priorität: 21.02.2004 DE 102004008635
(43) Veröffentlichungstag der Anmeldung: 15.11.2006
(73) Patentinhaber: INTERPANE Entwicklungs-und Beratungsgesellschaft mbH, 37697 Lauenförde (DE)
(72) Erfinder: Grimm, Friedrich, 70376 Stuttgart (DE)
(74) Vertreter: Körfer, Thomas
(86) Internationale Anmeldenummer: PCT/EP2005/000210
(87) Internationale Veröffentlichungsnummer: WO 2005/080738

(56) Entgegenhaltungen:
- WO-A-98/34000
- DE-A1- 10 119 635
- DE-A1- 19 923 057
- DE-C1- 19 827 867

## Beschreibung

Die Erfindung betrifft eine hochwärmedämmende Isolierverglasung, insbesondere eine mindestens zweischalige Isolierverglasung, bei der eine transparente oder transluzente Außenschale mit zwei Oberflächen und eine transparente oder transluzente Innenschale mit zwei Oberflächen vorgesehen sind, die untereinander einen Zwischenraum zur Aufnahme eines transluzenten Dämmstoffkörpers definieren; wobei der Dämmstoffkörper im Wesentlichen aus pyrogener, lichtdurchlässiger Kieselsäure besteht.

Im Stand der Technik (z.B. WO-9834000) ist es bekannt, Dämmstoffkörper aus Siliziumdioxid-Aerogel zu verwenden.

Ein transluzenter Dämmstoff auf der Basis pyrogener Kieselsäure ist bisher nicht bekannt. Mikroporöse Dämmstoffe aus hochdisperser, pyrogener Kieselsäure mit silikatischen Stützfasern zur mechanischen Verstärkung der Dämmstoffkörper werden durch spezielle Infrarot-Trübungsmittel für Dämmfunktionen im Hochtemperaturbereich ausgelegt. Ein derartiges Produkt ist der Wärmedämmstoff WDS der Firma Wacker-Chemie GmbH. Der in Plattenform in unterschiedlichen Dicken hergestellte Dämmstoff zeichnet sich durch eine äußerst niedrige Wärmeleitfähigkeit von 0,018 W/mK im Temperaturbereich bis 50°C aus. Bei einer Rohdichte von ca. 230 kg/m³ werden eine Biegefestigkeit von 0,16 N/mm² und eine Druckfestigkeit von 1-3 N/mm² erreicht. Als Anwendungsgrenztemperatur sind vom Hersteller 1000°C angegeben. Eine Veredelungstechnik sieht vor, die lichtundurchlässigen Wärmedämmstoffplatten in Metallfolien einzuschweißen und bei einem vergleichsweise geringen Unterdruck von 100 Millibar ein Vakuum bzw. einen Unterdruck herzustellen. Mit einem derartigen VacuTherm-Paneel, das beispielsweise von der Firma Schüco vertrieben wird, wird ein U-Wert von 0,26 W/m²K erreicht.

Ausgehend von dem dargestellten Stand der Technik liegt der Erfindung die Aufgabe zugrunde, einen neuen transluzenten Dämmstoff mit guten Wärmedämmeigenschaften herzustellen.

Die Aufgabe wird gelöst durch den Gegenstand des Anspruchs 1 sowie durch die Unteransprüche.

Die Erfindung ermöglicht es, die von der Firma Wacker Chemie hergestellte, pyrogene Kieselsäure WACKER HDK^{®} in einer speziellen Zustandsform als transluzenten Dämmstoff zu verwenden. Dazu dient von Natur aus reines, eisenoxydarmes Siliciumdioxyd als Matrix für tageslichttechnisch wirksame Zuschlagstoffe. Mit Hilfe dieser Zuschlagstoffe können einerseits die tageslichttechnischen und optischen Eigenschaften einer Isolierverglasung beeinflusst werden, andererseits kann die Lichtdurchlässigkeit der im Rohzustand als weißes, transluzentes bis opakes Pulver vorliegenden Kieselsäure verbessert werden. Die Integration eines transluzenten Dämmstoffkörpers, der im Wesentlichen aus pyrogener Kieselsäure besteht, in eine Isolierverglasung ermöglicht folgende vorteilhafte Ausgestaltungen der Erfindung:

### Lichtdurchlässigkeit:

Durch Verzicht auf das Inf'rarot-Trübungsmittel Siliciumcarbid kann bereits eine transluzente Dämmstoffplatte hergestellt werden. Glasfasern wirken lichtleitend, Mikroglaskugeln wirken hochreflektierend. Rutilfasern sind transparent bis opak und zeichnen sich durch den sogenannten Asterismus aus. Durch derartige anorganische, tageslichttechnisch wirksame Zuschlagstoffe kann die natürlich vorhandene Lichtdurchlässigkeit der pyrogenen Kieselsäure erhöht werden. Eine Alternative zur Verbesserung der Lichtdurchlässigkeit stellen organische Zuschlagstoffe, wie transluzente Kunststofffasern aus Acrylat, Polycarbonat, Polyäthylen und dergleichen, sowie poröse, transluzente Kunststoffkörper, dar. Eine transluzente, fasergestützte Dämmstoffplatte kann ggf. auch mit einer Schicht aus lichtleitenden Kunststoffröhrchen oder mit einer transluzenten, geschäumten Kunststoffplatte kombiniert werden, sodass der Dämmstoffkörper als transluzente Mehrschichtverbundplatte ausgebildet ist.

### Farbgestaltung:

Durch Metalloxyde lässt sich die nanoporöse Struktur der pyrogenen Kieselsäure färben. Bei der Herstellung von in der Masse durchgefärbten Gläsern bewirken folgende Oxyde unterschiedliche Farben, z.B.: Eisenoxyd - Grün; Kobaltoxyd - Blau; Manganoxyd - Violett, Braun; Nickeloxyd - Grau; Kupferoxyd - Rot; Selenoxyd - Hellrot; Chromoxyd - Grün; Silberoxyd - Zitronengelb; Goldoxyd - Rosa; Uranoxyd - Lindgrün.
Erfindungsgemäße Isolierglaseinheiten können sowohl schneeweiß und lichtstreuend als auch in unterschiedlichen transparenten Farben aufscheinend hergestellt werden.

### Mechanische Festigkeit:

Zur Erhöhung der mechanischen Festigkeit wird vorgeschlagen, die Matrix aus pyrogener Kieselsäure in ein Gerüst aus räumlich vernetzten Fasern einzubetten und zu Platten zu pressen. Werden die Zuschlagstoffe durch Wärmeeinwirkung untereinander verschmolzen oder verschweißt, entsteht ein räumliches Tragwerk, das als biege- und schubsteifer Sandwichkern seinerseits mit den Glasscheiben verklebt oder verschweißt werden kann, sodass ein hochfestes, transluzentes Verbundpaneel entsteht. Für die Verklebung mit den Glasscheiben kommen UVhärtende, klar durchsichtige Zweikomponentenkleber, aber auch Silikonklebeverbindungen in Frage. Da die Kieselsäure erst bei 1000°C reagiert, können eingebettete Glasfasern oder Glaskörper, deren Erweichungstemperatur bei 670°C liegt, untereinander und ggf. auch mit den Glasscheiben verschweißt werden. So können die lichtleitenden Glasfasern unmittelbar mit den Scheiben verbunden werden.

### Randverbund:

Wird die pyrogene Kieselsäure mit tageslichttechnisch wirksamen Zuschlagstoffen als rieselfähige Schüttung in den Scheibenzwischenraum eingebracht, ist ein herkömmlicher Randverbund mit Metallabstandhalter ein wirksamer Feuchteschutz für den Dämmstoffkörper. Bei einem geklebten Verbundsandwich kann ein herkömmlicher Randverbund entfallen. Die fasergestützte Dämmstoffplatte wird hier im Randbereich lediglich durch Wachse oder Paraffine imprägniert. Eine Anwendungsgrenztemperatur von 1000°C ermöglicht das Einschweißen einer erfindungsgemäßen, transluzenten Dämmstoffplatte in Glas. Ein geschweißter Randverbund bei Isolierglas ist unter den Produktnamen Gado und Sedo bekannt. Dabei werden die Glasscheiben im Randbereich bis zum Schmelzpunkt erhitzt, abgekröpft und miteinander verschmolzen. Der geschweißte Randverbund ermöglicht die Evakuierung des Scheibenzwischenraums, wobei eine erfindungsgemäße Dämmstoffplatte als drucksteifer Abstandhalter zwischen den Glasscheiben dient. Bei der Herstellung wird in einem mehrstufigen Prozess die Luft über spezielle Spülbohrungen aus dem Scheibenzwischenraum abgezogen. Zuletzt werden die Spülbohrungen mit Glasmasse verschweißt. Bei einer neuartigen Ausführungsvariante wird ein durch heiße Luft gestütztes Glasrohr im plastischen Zustand mit den Glasscheiben verschweißt.

### Wärmedämmung:

Ein transluzenter Dämmstoffkörper aus pyrogener Kieselsäure besitzt bereits unter atmosphärischem Druck eine wesentlich höhere Dämmleistung als herkömmliche Dämmstoffe. Im Vergleich zu Mineralwolle, z.B., kann bei gleicher Dämmleistung die Dämmstoffdicke um den Faktor 6 reduziert werden. Unter Vakuum, d.h. bereits bei einem moderaten Unterdruck von 50 Millibar wird die Wärmedämmung nochmals deutlich verbessert. So kann bei einer gegebenen Dämmleistung die Dämmstoffdicke auf ein Zehntel der Dicke eines herkömmlichen Dämmstoffs reduziert werden.

Aufgrund der deutlich reduzierten Dämmstoffdicke eignet sich pyrogene Kieselsäure hervorragend für den Einbau in den Scheibenzwischenraum einer Isolierglaseinheit mit versiegeltem Randverbund. Besonders einfach erscheint der Einbau von gepressten Dämmstoffplatten aus pyrogener Kieselsäure mit einem Stützgewebe aus transluzenten Glasfasern. Eine Edelgasbefüllung des Scheibenzwischenraums und eine Low-E-Beschichtung auf Position 2 der Isolierglaseinheit in Kombination mit einem transluzenten, nanoporösen Dämmstoffkörper im Scheibenzwischenraum bewirken eine Absenkung des U-Wertes auf weniger als 0,5 W/m²K. Bei einem erfindungsgemäßen Verbundsandwich können die Glasscheiben vergleichsweise dünn, die Dämmstoffplatte dafür aber deutlich dicker, z. B. 30 bis 40 mm dick, ausgebildet werden, sodass auf diese Weise der U-Wert noch weiter abgesenkt werden kann. Die Unempfindlichkeit pyrogener Kieselsäure gegenüber hohen Temperaturen und die Druckfestigkeit einer erfindungsgemäßen Dämmstoffplatte ermöglichen die Ausbildung von Isolierglas mit geschweißtem Ganzglas-Randverbund und einem evakuierten Scheibenzwischenraum. Technisch einfacher ist das Einschweißen des Dämmstoffkörpers in eine transparente, polymere, laminierte Verbundfolie mit Siliciumbedampfung. Derartige evakuierte Dämmstoffkissen können zwischen beliebige transluzente oder transparente Schalen aus Kunststoff oder Glas eingebaut werden. Ein beispielsweise 15 mm dicker Dämmstoffkörper, der in einer Vakuumkammer in eine transparente Barriere-Folie eingeschweißt wird, ermöglicht die Absenkung des U-Werts auf 0,22 W/m²K bei einer erfindungsgemäßen Isolierverglasung.
Die nanoporöse Struktur aus Agglomeraten der pyrogenen Kieselsäure reduziert die Wärmeübertragung durch Konvektion auf ein Minimum. Wärmeübertragung durch Wärmeleitung ist durch die Minimierung des Festkörperkontakts der Nanokugeln untereinander ebenfalls weitgehend ausgeschlossen. Eine Low-E-Beschichtung auf Position 2 einer Isolierglaseinheit eliminiert den Wärmeflussanteil durch Strahlung fast vollständig, sodass der Verzicht auf ein Infrarot-Trübungsmittel bei einem Wärmedämmstoff aus pyrogener Kieselsäure die Dämmleistung nicht oder nur unwesentlich herabsetzt. Ein Reflektor für energiereiche Infrarotstrahlung kann alternativ auch durch Beschichtung der transluzenten Barrierefolie hergestellt werden. Der ohnehin minimale Wärmeverlust durch Konvektion kann durch eine Edelgasbefüllung des Scheibenzwischenraums einer Isolierglaseinheit mit Dämmstoffkörper noch weiter reduziert werden.

### Isolierglaseinheit mit variabler Energietransmission:

Versieht man den Dämmstoffkörper aus pyrogener Kieselsäure mit längs und quer angeordneten Kanälen und / oder Konvektionsöffnungen, die als Verteilernetz für ein hochwärmeleitendes Gas, wie z.B. Wasserstoff oder Helium, dienen, kann eine erfindungsgemäße Isolierglaseinheit mit variabler Energietransmission hergestellt werden. Dazu benötigt man wenige Gramm eines im Scheibenzwischenraum integrierten Metallhydrids, das in der Lage ist, eine kleine Menge Wasserstoff freizusetzen und wieder aufzunehmen. Für den wärmeleitenden Zustand wird eine elektrische Leistung von etwa 5 W pro Quadratmeter Isolierglas benötigt. Schaltet man die Spannung ab, wird der in den Kanälen zirkulierende Wasserstoff von dem Metallhydrid gebunden. Ist der Wasserstoff im spannungslosen Zustand gebunden, besitzt eine entsprechende Isolierglaseinheit hervorragende Dämmeigenschaften. Unter elektrischer Spannung freigesetzter Wasserstoff erhöht die Wärmeleitfähigkeit der Isolierglaseinheit drastisch. Voraussetzung für eine schaltbare Wärmedämmung ist eine möglichst vollständige Evakuierung des Scheibenzwischenraums. Inselförmig verteilte Dämmstoffkörper aus pyrogener Kieselsäure dienen in diesem Fall als drucksteife Abstandhalter zwischen Innen- und Außenschale der Isolierglaseinheit.

### Konstruktion und Montage:

Erfindungsgemäße, hochwärmedämmende Isolierglaseinheiten können in herkömmliche Glashaltekonstruktionen, in Pfosten-Riegel-Bauweise, in Elementbauweise, aber auch in Konstruktionen mit punktförmiger Scheibenhalterung eingebaut werden. Die Ausführungsvariante einer Isolierglaseinheit ohne Randverbund ermöglicht konstruktive Stöße, wie Stumpfstoß, Überplattungs- und Übergreifungsstoß, aber auch Stöße mit Nut und Feder und Eckverbindungen mit Versatz oder auf Gehrung. Im Rahmen der Erfindung ist der Einbau evakuierter, folienumhüllter Dämmstoffkörper zwischen zwei Schalen aus Profilbauglas, Glasbausteinen oder Hohlkammerplatten aus Kunststoff ebenfalls möglich.

Im Folgenden wird die Erfindung anhand von unterschiedlichen Ausführungsbeispielen näher erläutert. Es zeigt:
- Fig. 1: einen Schnitt durch eine Isolierverglasung mit Randverbund und einem transluzenten Dämmstoffkörper aus pyrogener Kieselsäure, der als rieselfähige Schüttung in den Scheibenzwischenraum eingebracht wurde,
- Fig. 2: einen Schnitt durch eine Isolierverglasung, bei der die Glasscheiben mit einem transluzenten Dämmstoffkörper aus pyrogener Kieselsäure biege- und schubsteif verklebt sind,
- Fig. 3: einen Schnitt durch eine Vakuum-Isolierverglasung, bei der der transluzente Dämmstoffkörper aus pyrogener Kieselsäure mit den Glasscheiben verschweißt ist,
- Fig. 4: einen Schnitt durch eine Vakuum-Isolierverglasung, bei der der transluzente Dämmstoffkörper aus pyrogener Kieselsäure als drucksteifer Abstandhalter im Scheibenzwischenraum dient,
- Fig. 5: einen Schnitt durch eine Vakuum-Isolierverglasung mit transluzentem Dämmstoffkörper aus pyrogener Kieselsäure und einem geschweißten Randverbund aus Glasröhren,
- Fig. 6: einen Schnitt durch eine Isolierverglasung mit konventionellem Randverbund, bei der der Dämmstoffkörper aus pyrogener Kieselsäure von einer transparenten Kunststofffolie umgeben ist,
- Fig. 7: einen Schnitt durch eine Isolierverglasung, bei der der Dämmstoffkörper aus pyrogener Kieselsäure mit einer Schicht aus transluzenten Kunststoffröhrchen kombiniert ist,
- Fig. 8: einen Schnitt durch eine Isolierverglasung, bei der der transluzente Dämmstoffkörper aus pyrogener Kieselsäure von einer transparenten Folie umhüllt und zwischen zwei Hohlkammerplatten aus transluzentem Kunststoff eingebaut ist,
- Fig. 9: einen Schnitt durch eine Isolierverglasung, bei der die Außen- und die Innenschale von Profilbauglas gebildet wird, und
- Fig. 10: einen Schnitt durch eine Vakuum-Isolierverglasung mit gelötetem Randverbund und variabler Energietransmission, bei der einzelne Dämmstoffkörper aus pyrogener Kieselsäure als drucksteife Abstandhalter dienen.

In den Figuren sind Schnitte durch unterschiedliche Isolierverglasungen dargestellt. Erfindungsgemäß befindet sich im Zwischenraum 20 ein Dämmstoffkörper 30 aus pyrogener Kieselsäure 31. Nanoporöses Siliciumdioxyd besitzt hervorragende Wärmedämmeigenschaften und liegt zudem in reinem Zustand als transluzentes bis opak-weißes Pulver vor. Die pyrogene Kieselsäure 31 wird auf unterschiedliche Weise im Zwischenraum 20 einer Isolierverglasung eingebaut. Beispielhafte, vorteilhafte Ausgestaltungen der Erfindung gehen aus der Figurenbeschreibung hervor.

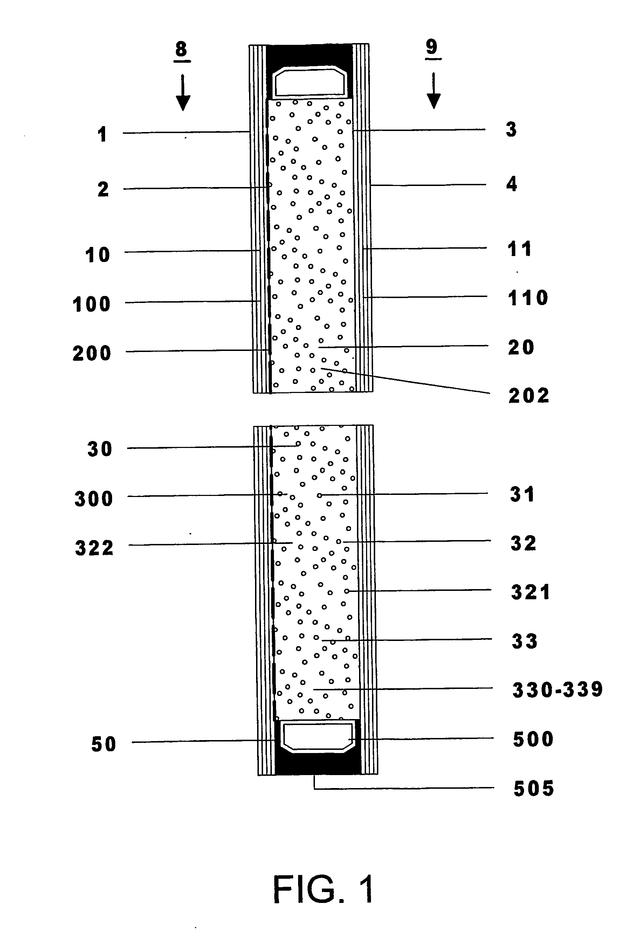

Fig. 1 zeigt eine hochwärmedämmende Isolierverglasung mit einer Außenschale 10 und einer Innenschale 11, welche einen transluzenten Dämmstoffkörper 30 umgeben. Der Mittelteil ist nicht dargestellt. Die Außenschale 10 weist eine äußere Oberfläche 1 und eine innere, also dem Dämmstoffkörper 30 zugewandte Oberfläche 2 auf. Die Innenschale 11 weist eine äußere Oberfläche 4 und eine innere, also dem Dämmstoffkörper 30 zugewandte Oberfläche 3 auf. Die Außenseite 8 der Isolierverglasung ist beispielsweise in einem Gebäude nach außen gerichtet, und die Innenseite 9 der Isolierverglasung nach innen.

Die Außenschale 10 und die Innenschale 11 sind in diesem Ausführungsbeispiel aus Glasscheiben 100 bzw. 110 ausgebildet. Der Innenraum 20 zwischen den Glasscheiben 100 und 110 ist mit einem Edelgas 202 befüllt. Die Innenseite 2 der Außenschale 10 ist mit einer Low-E-Beschichtung 200 versehen. Der transluzente Dämmstoffkörper 30 weist eine pyrogene Kieselsäure 31 als rieselfähige Schüttung 300 auf, um Hohlräume im Scheibenzwischenraum 20 zu vermeiden. Der Scheibenzwischenraum 20 ist durch einen Randverbund 50 mit einem Metallabstandhalter 500 und einer Abdichtung 505 vor Feuchtigkeit geschützt. Die Edelgasfüllung 202 und die Low-E-Beschichtung 200 der Oberfläche 2 der äußeren Glasscheibe 100 verbessern die Wärmedämmung der Isolierverglasung. Die pyrogene Kieselsäure 31 unterbindet den Wärmedurchgang durch Konvektion fast vollständig. Sie ist außerdem ein hervorragender UV-Blocker. Geringe Strahlungsanteile im IR-Bereich werden von der Low-E-Beschichtung 200 reflektiert. Mikroglaskugeln 321, die in der Matrix aus Kieselsäure eingebettet sind, wirken hochreflektierend, sowohl für das Strahlungsüberangebot bei Besonnung als auch für Kunstlicht, das in den Raum zurückreflektiert wird. Die Lichtdurchlässigkeit der Isolierverglasung trägt zur Tagesbelichtung der Räume bei und lässt mögliche Farben aus Metalloxyden 33 transluzent erscheinen. Eisenoxyd 330 bewirkt eine Grünfärbung, Kobaltoxyd 331 steht für Blau, Manganoxyd 332 für Violett, Nickeloxyd 333 für Grau, Kupferoxyd 334 für Rot, Selenoxyd 335 für Hellrot, Chromoxyd 336 für Grün, Silberoxyd 337 für Zitronengelb, Goldoxyd 338 für Rosa und Uranoxyd 339 für Lindgrün. Diese tageslichttechnisch wirksamen Zuschlagstoffe können einzeln oder auch in beliebigen Kombinationen verwendet werden. Beigemengte Rutilfasern 322 erhöhen die Lichtbrechung und lassen die Farben transparent bis opak aufscheinen.

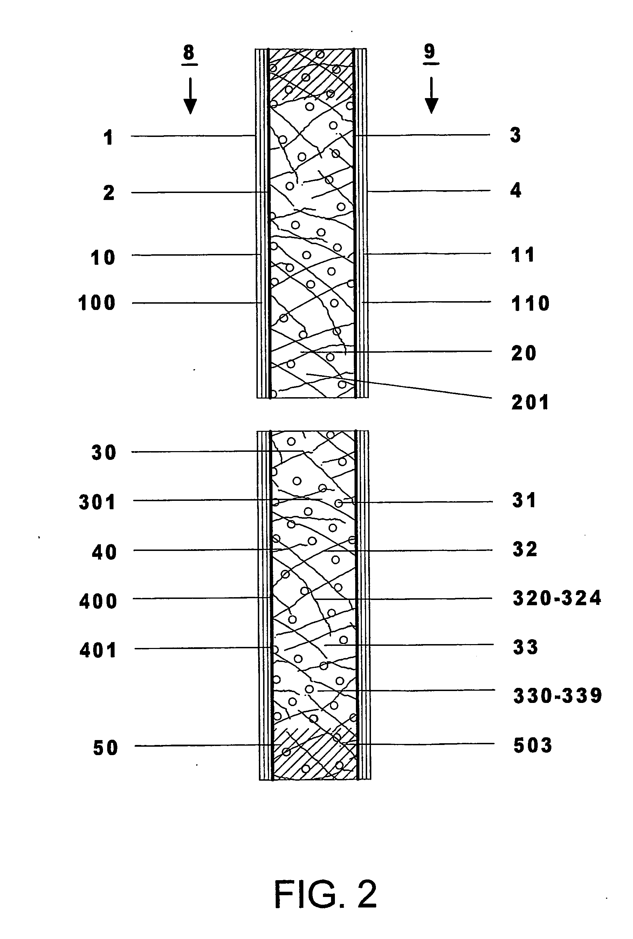

**Fig. 2** zeigt eine hochwärmedämmende Isolierverglasung, die als Verbundsandwich 40 aufgebaut ist, wobei der Dämmstoffkörper 30 aus einer fasergestützten Dämmstoffplatte 301 besteht, die durch UV-Kleber 400 oder Siliconkleber 401 schubsteif mit den Scheiben 100, 110 verbunden ist. Die Lichtdurchlässigkeit des Elements hängt von dem Anteil der jeweiligen Zuschlagstoffe 32 ab, die als tageslichttechnisch wirksame Elemente die Lichtdurchlässigkeit der Isolierverglasung bestimmen. Ein Anteil von beispielsweise 20% Glasfasern 320 erhöht die Durchlässigkeit für Tageslicht. Hohle Mikroglaskugeln 321 tragen ebenfalls zu einer Aufhellung der Matrix aus pyrogener Kieselsäure 31 bei. Eine alternative Möglichkeit zur Erhöhung der Lichtdurchlässigkeit sind transluzente Kunststofffasern und poröse Kunststoffkörper, beispielsweise Acrylfasern, Polycarbonatfasern, Polyäthylenfasern und Styropor. Der Feuchteschutz des Dämmstoffkörpers 30, der als fasergestützte Dämmstoffplatte 301 eine schubsteife Verbindung zwischen den Scheiben 100, 110 herstellt, besteht aus einer Imprägnierung 503 der Dämmstoffplatte 301 im Randbereich durch Wachse oder Paraffine.

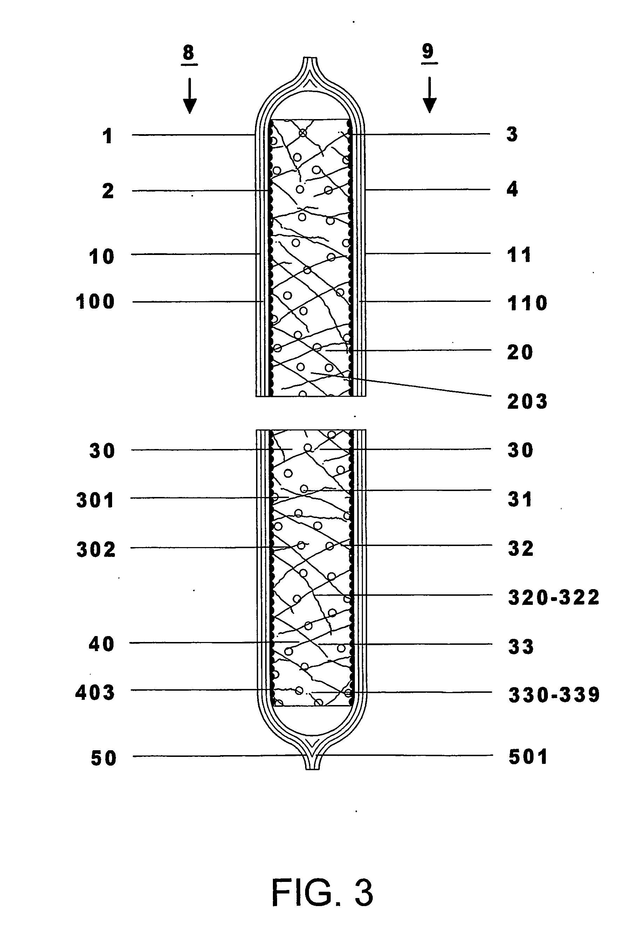

**Fig. 3** zeigt eine Vakuum-Isolierverglasung mit einem Randverbund 50, bei dem die Scheiben 100, 110 durch eine Schweißverbindung 501 zusammengeschmolzen werden. In einem Ofen wird die gesamte Isolierglaseinheit auf ca. 670°C erhitzt, sodass die in eine Matrix aus pyrogener Kieselsäure 31 eingebundenen Glasfasern 320 sowohl untereinander als auch an den Oberflächen 2, 3 mit den Scheiben 100, 110 verschmolzen werden. Auf diese Weise entsteht ein äußerst stabiles, transluzentes und hochwärmedämmendes Verbundsandwich 40. Die interne Tragstruktur 302 besteht aus räumlich vernetzten, untereinander verschmolzenen Glasfasern 320. Zwischen den Scheiben 100, 110 und dem Dämmstoffkörper 30 entstehen an den Oberflächen 3, 4 Schweißverbindungen 403. Die tageslichttechnisch wirksamen Zuschlagstoffe 32 bestehen bevorzugt ausschließlich aus anorganischem Material, wobei zur Aufhellung auch hohle Mikroglaskugeln 321 vorgesehen sind.

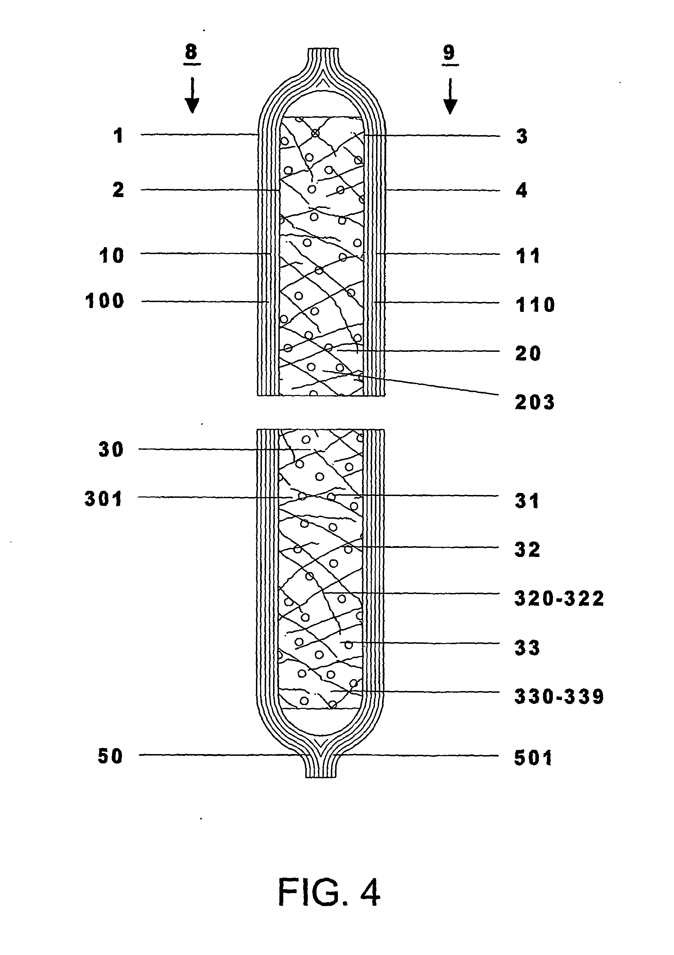

**Fig. 4** zeigt eine Isolierverglasung, die in ihrem Aufbau im Wesentlichen der in Fig. 3 dargestellten Ausführungsvariante entspricht. Der Dämmstoffkörper 30 ist hier als fasergestützte Dämmstoffplatte 301 ausgebildet und dient als drucksteifer Abstandhalter innerhalb des Scheibenzwischenraums 20, in dem ein Vakuum 203 herrscht. Der geschweißte Ganzglas-Randverbund 501 stellt eine dauerhafte Vakuumdichtigkeit der Isolierverglasung sicher.

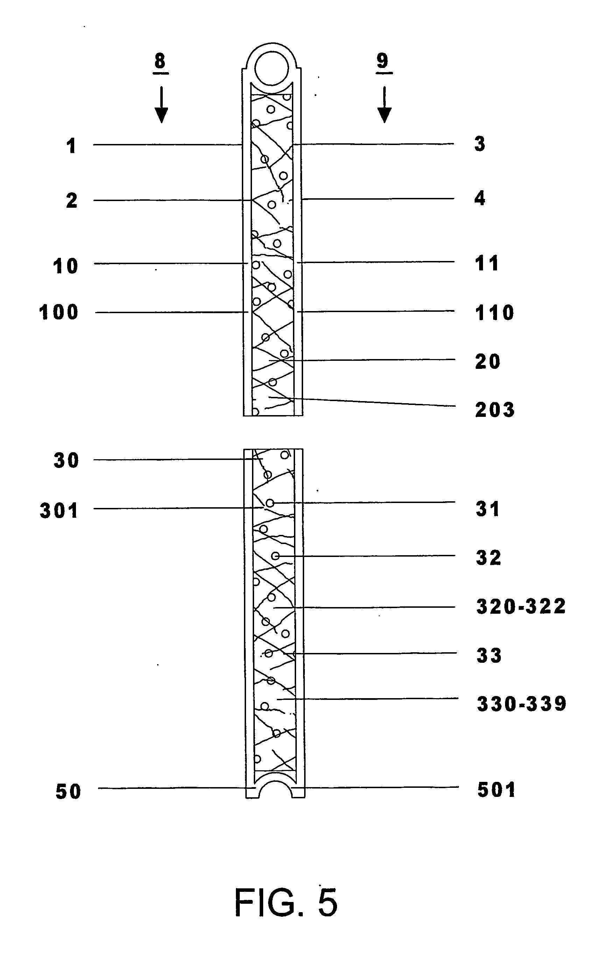

**Fig. 5** zeigt eine Vakuum-Isolierverglasung mit einem nur 10 mm dicken Dämmstoffkörper 30, der als fasergestützte, drucksteife Dämmstoffplatte 301 ausgebildet ist. Die Druckkräfte, die auf die nur 2 mm dicken Scheiben 100, 110 einwirken, stellen an den Oberflächen 2, 3 zwischen dem Dämmstoffkörper 30 und den Scheiben 100, 110 einen schubsteifen Reibungsverbund her. Die Abdichtung des evakuierten Scheibenzwischenraums 20 erfolgt über Abstandhalter aus Glasröhren 501, die, von heißer Luft gestützt, mit den Scheiben 10, 11 verschweißt werden. Da die pyrogene Kieselsäure 31 bei dieser Ausführungsvariante nur 10 mm dick ist, ist eine hohe Lichtdurchlässigkeit gegeben.

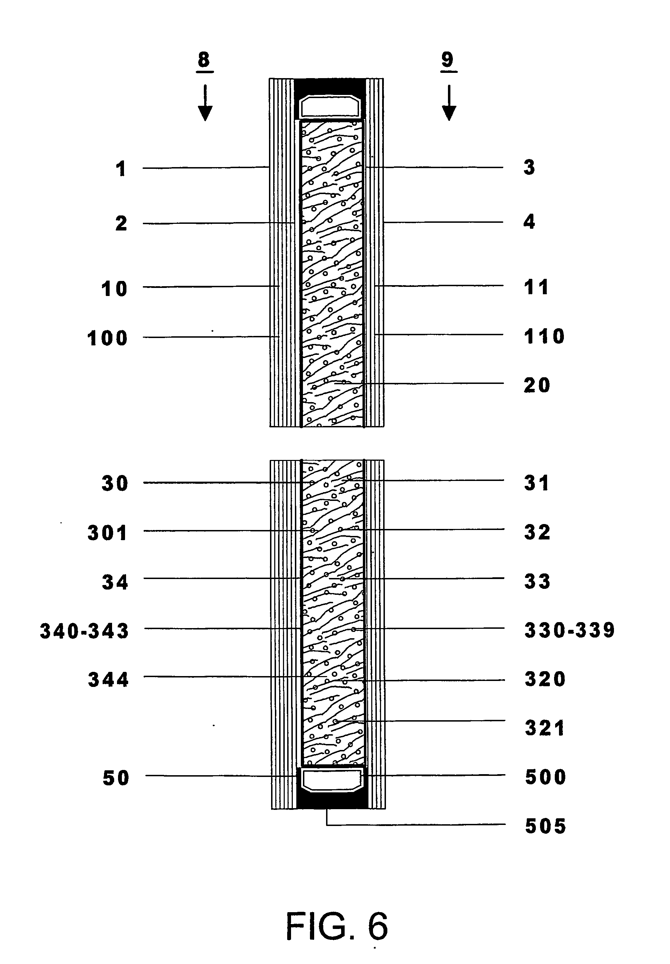

**Fig. 6** zeigt eine Isolierverglasung, bei der die Außenschale 10 und die Innenschale 11 jeweils von unterschiedlich dicken Glasscheiben 100, 110 gebildet werden. Ein Abstandhalter 500 mit Versiegelung und Abdichtung 505 schützt den Zwischenraum 20, in den eine fasergestützte Dämmstoffplatte 301 lose eingebaut ist, vor Feuchtigkeit. Eine transparente Kunststofffolie 34, die als laminierte Verbundfolie 340 mit einer Siliciumbedampfung 342 und verschweißten Rändern 341 eine vakuumdichte Umhüllung der fasergestützten Dämmstoffplatte 301 darstellt, verbessert durch den Unterdruck 344 die Wärmedämmeigenschaften des Dämmstoffkörpers 30 erheblich. Die Bedampfung mit einer Infrarot reflektierenden Schicht 434 auf der Folie 34 reduziert eine mögliche Wärmeübertragung durch energiereiche Infrarotstrahlung.

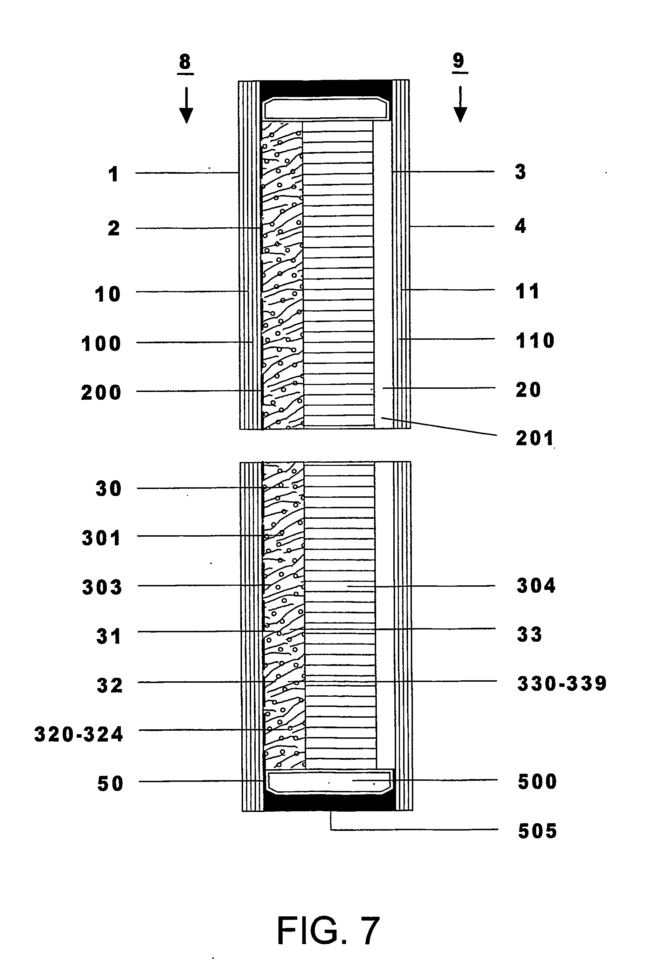

**Fig. 7** zeigt eine Isolierverglasung, bei der der Zwischenraum 20 eine Luftfüllung 201 aufweist und zusätzlich zu einer fasergestützten Dämmstoffplatte 301 aus pyrogener Kieselsäure 31 eine Dämmstoffplatte aus lichtleitenden Kunststoffröhrchen 304 eingebaut wurde. Beide transluzenten Dämmstoffkörper 30 bilden eine Mehrschichtverbundplatte 303; die durch Additive 32 aus Glasfasern 320 und Mikroglaskugeln 321 verdünnte pyrogene Kieselsäure 31 wirkt lichtstreuend, während die Kunststoffröhrchen 304 lichtlenkend wirken. Ein Randverbund 50 mit Metallabstandhalter 500 und einer Abdichtung 505 schützt den Zwischenraum 20 vor Feuchtigkeit.

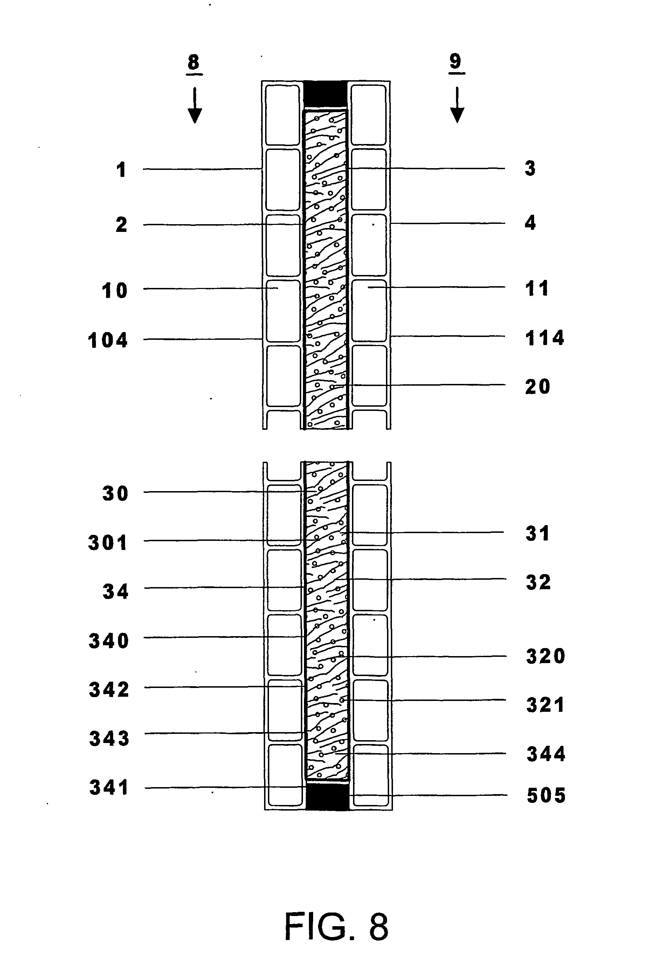

**Fig. 8** zeigt eine Isolierverglasung mit einem transluzenten Dämmstoffkörper 30, der als fasergestützte Platte 301 ausgebildet ist und zwischen eine Außenschale 10 und eine Innenschale 11, die jeweils als transluzente Hohlkammerplatte 104, 114 ausgebildet sind, eingesetzt wurde. Die fasergestützte Dämmstoffplatte 301 ist in eine transparente Kunststofffolie 34 mit verschweißten Rändern eingeschweißt. Ein Unterdruck 344 verbessert die Wärmedämmung. Die transparente Kunststofffolie 34 ist als laminierte Verbundfolie 340 mit SiOx-Bedampfung 342 und Infrarotreflektor 343 ausgestattet. Eine Abdichtung 505 schützt den Zwischenraum 20 vor Feuchtigkeit.

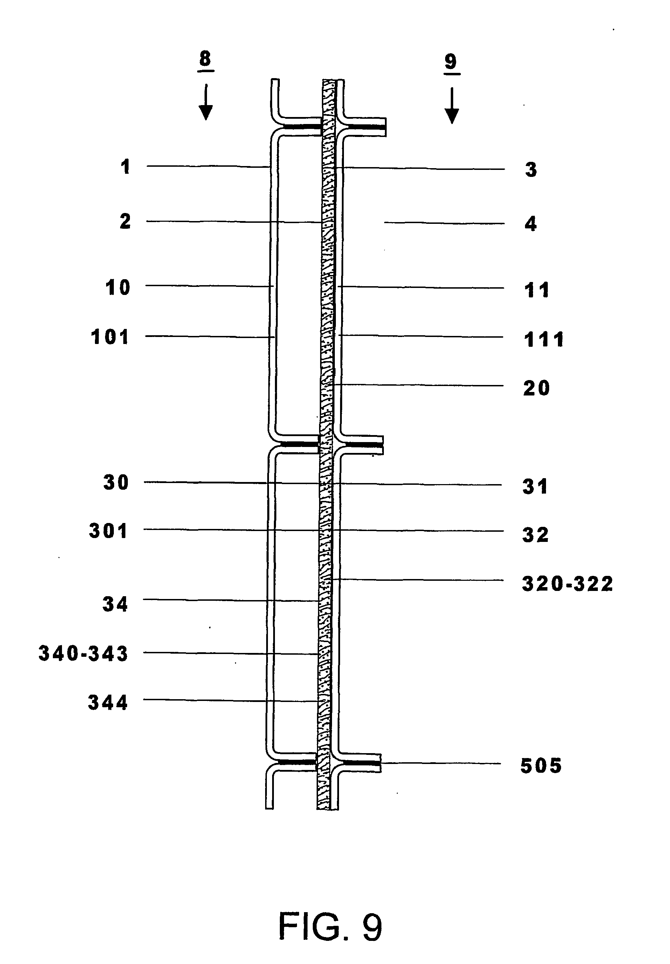

**Fig. 9** zeigt eine Isolierverglasung, bei der die Außen- und Innenschale 10, 11 jeweils aus Profilbauglas 101, 111 besteht. Die Profilbaugläser 101, 111 sind durch Abdichtungen 505 vor Feuchtigkeit geschützt und definieren einen Zwischenraum 20, in dem ein transluzenter Dämmstoffkörper 30 aus pyrogener Kieselsäure 31 eingebaut wird. Tageslichttechnisch wirksame Zuschlagstoffe 32 wie z.B. Glasfasern 320 und Mikroglaskugeln 321 verbessern die Lichtdurchlässigkeit der fasergestützten Dämmstoffplatte 301, die in eine transparente Kunststofffolie 34 eingeschweißt ist. Auch hier sorgt ein Unterdruck 344 für eine Verbesserung der Dämmeigenschaften.

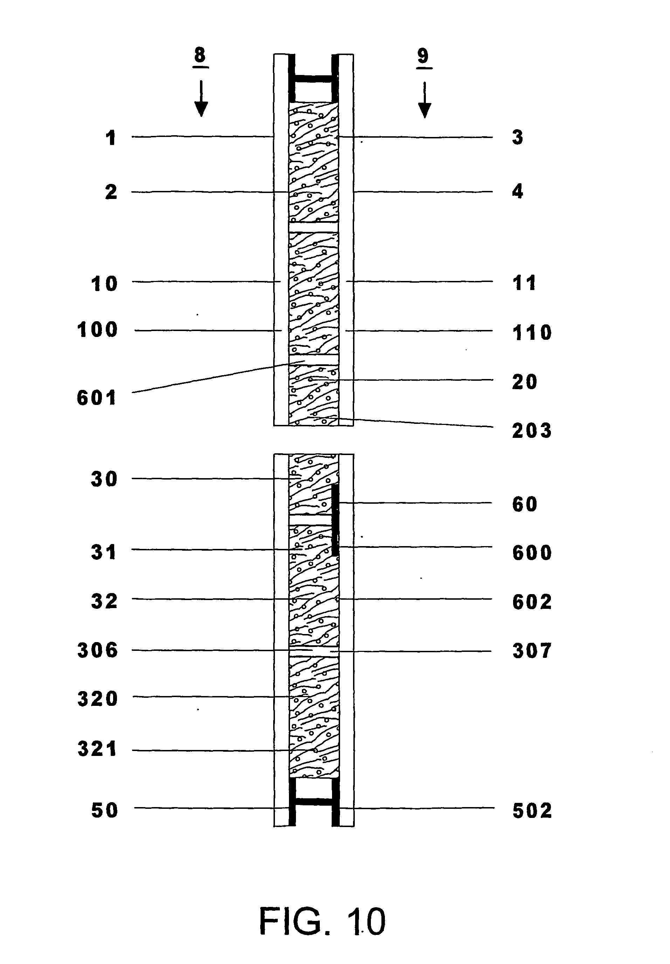

**Fig. 10** zeigt eine Vakuum-Isolierverglasung mit variabler Energietransmission. Die äußere Glasscheibe 100 und die innere Glasscheibe 110 bilden über einen gelöteten Randverbund 502 einen vakuumdichten Zwischenraum 20. Bei diesem Randverbund werden zwei Scheiben im Randbereich verkupfert und mit einem dünnen Bleisteg verlötet. Einzelne Dämmstoffkörper 30, die durch längs und quer angeordnete Kanäle 306 mit Konvektionsöffnungen 307 unterbrochen sind, bilden ein Verteilernetz für Wasserstoffgas 601, das durch Anlegen einer elektrischen Spannung über einen Elektroanschluss 602 bedarfsweise freigesetzt wird. Der Wasserstoff 601 wird im spannungsfreien Zustand von einem Getter 60, in dem ein Metallhydrid 600 eingeschlossen ist, gebunden. Diese Vakuum-Isolierverglasung besitzt hervorragende Wärmedämmeigenschaften. Sind jedoch Energiegewinne durch solare Einstrahlung erwünscht, kann die Wärmeleitfähigkeit der Isolierverglasung durch Anlegen einer elektrischen Spannung drastisch erhöht werden. Eine derartige Isolierverglasung ist in der Lage, aktiv auf die wechselnden Temperatur- und Einstrahlungsbedingungen zu reagieren. Die Dämmstoffkörper 30 dienen als drucksteife Abstandhalter zwischen den Glasscheiben.

Es folgt eine Bezugszeichenübersicht:

| **Glas** | |
|---|---|
| **Außenschale** | **10** |
| Oberfläche | 1 |
| Oberfläche | 2 |
| Glasscheibe | 100 |
| Profilbauglas | 101 |
| Glasbausteine | 102 |
| Transparenter/transluzenter Kunststoff | 103 |
| Hohlkammerplatte | 104 |
| **Innenschale** | 11 |
| Oberfläche | 3 |
| Oberfläche | 4 |
| Glasscheibe | 110 |
| Profilbauglas | 111 |
| Glasbausteine | 112 |
| Transparente/transluzente Kunststoffplatte | 113 |
| Hohlkammerplatte | 114 |
| **Zwischenraum** | 20 |
| Low-E-Beschichtung | 200 |
| Luftfüllung | 201 |
| Edelgasfüllung | 202 |
| Vakuum | 203 |
| **Verbundsandwich** | 40 |
| UV-Kleber | 400 |
| Silikonkleber | 401 |
| Schweißverbindung | 403 |
| **Randverbund** | 50 |
| Metallabstandhalter mit Versiegelung | 500 |
| Geschweißter Ganzglas-Randverbund | 501 |
| Gelöteter Randverbund | 502 |
| Imprägnierung | 503 |
| Beschichtung | 504 |
| Abdichtung | 505 |
| **Getter** | 60 |
| Metallhydrid | 600 |
| Leichtgas (Wasserstoff oder Helium) | 601 |
| Elektroanschluss | 602 |

| **Dämmstoff** | |
|---|---|
| **Transluzenter Dämmstoffkörper** | 30 |
| Rieselfähige Schüttung | 300 |
| Fasergestützte Dämmstoffplatte | 301 |
| Interne Tragstruktur | 302 |
| Mehrschichtverbundplatte | 303 |
| Lichtleitende Kunststoffröhren | 304 |
| Geschäumter Kunststoff | 305 |
| Kanäle | 306 |
| Konvektionsöffnungen | 307 |
| **Pyrogene Kieselsäure** | **31** |
| **Tageslichttechnisch wirksame Zuschlagstoffe (Additive)** | **32** |
| Glasfasern | 320 |
| Mikroglaskugeln | 321 |
| Rutilfasern | 322 |
| Kunststofffasern | 323 |
| Poröse Kunststoffkörper | 324 |
| **Metalloxyde** | **33** |
| Eisenoxyd (Grün) | 330 |
| Kobaltoxyd (Blau) | 331 |
| Manganoxyd (Violett) | 332 |
| Nickeloxyd (Grau) | 333 |
| Kupferoxyd (Rot) | 334 |
| Selenoxyd (Hellrot) | 335 |
| Chromoxyd (Grün) | 336 |
| Silberoxyd (Zitronengelb) | 337 |
| Goldoxyd (Rosa) | 338 |
| Uranoxyd (Lindgrün) | 339 |
| **Transparente Kunststofffolie** | **34** |
| Laminierte Verbundfolie | 340 |
| Verschweißte Ränder | 341 |
| SiOx-Bedampfung | 342 |
| Infrarot-Reflektor | 343 |
| Unterdruck | 344 |

## Patentansprüche

1. Hochwärmedämmende Isolierverglasung, welche aufweist:
eine transluzente oder transparente Außenschale (10),
eine transluzente oder transparente Innenschale (11),
einen transluzenten Dämmstoffkörper (30), welcher zwischen
der Außenschale (10) und der Innenschale (11) angeordnet ist,
**dadurch** gekennzeichet, dass der transluzente Dämmstoffkörper (30) pyrogene, lichtdurchlässige Kieselsäure (31) aufweist.

2. Hochwärmedämmende Isolierverglasung nach Anspruch 1, bei der die pyrogene Kieselsäure (31) eine Matrix bildet, in die tageslichttechnisch wirksame Zuschlagstoffe (32) eingebettet sind.

3. Hochwärmedämmende Isolierverglasung nach Anspruch 2, bei der die tageslichttechnisch wirksamen Zuschlagstoffe (32) aus anorganischem Material, insbesondere aus Glasfasern (320), aus Mikroglaskugeln, aus hohlen Mikroglaskugeln (321) oder aus Rutilfasern (322), bestehen.

4. Hochwärmedämmende Isolierverglasung nach Anspruch 2 oder 3, bei der die tageslichttechnisch wirksamen Zuschlagstoffe (32) aus organischem Material, insbesondere aus transluzenten Kunststofffasern (323) oder aus porösen, transluzenten Kunststoffkörpern (324), bestehen.

5. Hochwärmedämmende Isolierverglasung nach einem der Ansprüche 2 bis 4, bei der die Matrix aus pyrogener Kieselsäure (31) eine interne Tragstruktur (302) aufweist, die durch Verschweißen oder Verschmelzen der Zuschlagstoffe (32) gebildet wird.

6. Hochwärmedämmende Isolierverglasung nach einem der vorhergehenden Ansprüche, bei der der transluzente Dämmstoffkörper (30) als rieselfähige Schüttung (300) oder als fasergestützte Dämmstoffplatte (301) oder als Mehrschichtverbundplatte (303) mit mindestens einer Schicht aus pyrogener Kieselsäure (31) ausgebildet ist.

7. Hochwärmedämmende Isolierverglasung nach einem der vorhergehenden Ansprüche, bei der die pyrogene Kieselsäure (31) durch Metalloxyde (33) mit unterschiedlichen, transluzenten Farben (330-339) eingefärbt wird.

8. Hochwärmedämmende Isolierverglasung nach einem der vorhergehenden Ansprüche, bei der die Außenschale (10) und die Innenschale (11) eine Isolierglaseinheit mit Randverbund (50) bilden, wobei der Randverbund (50) aus einem Metallabstandhalter mit Versiegelung (500), einem gelöteten Randverbund (501), einem gelöteten Randverbund (501) mit Bleisteg oder einem geschweißten Ganzglas-Randverbund (502) besteht.

9. Hochwärmedämmende Isolierverglasung nach einem der vorhergehenden Ansprüche, bei der die Außenschale (10) und die Innenschale (11) jeweils als transparente Glasscheibe (100, 110) in Form einer Floatglasscheibe, einer Verbundsicherheitsglasscheibe, einer vorgespannten oder teilvorgespannten Glasscheibe, als Profilbauglas (101, 111), als Glasbaustein, als transparente oder transluzente Kunststoffplatte (103, 113) oder als Hohlkammerplatte (104, 114) ausgebildet sind.

10. Hochwärmedämmende Isolierverglasung nach einem der vorhergehenden Ansprüche, bei der der transluzente Dämmstoffkörper (30) in einer transparenten Kunststofffolie (34) eingeschweißt ist, so dass er in einer Vakuumkammer mit einem Unterdruck (343) versehbar ist.

11. Hochwärmedämmende Isolierverglasung nach Anspruch 10, bei der die den Dämmstoffkörper umhüllende, transparente Kunststofffolie (34) eine aufgedampfte, Infrarot reflektierende Schicht (343) aufweist.

12. Hochwärmedämmende Isolierverglasung nach einem der vorhergehenden Ansprüche, bei der der transluzente Dämmstoffkörper (30) durch Kanäle (306) und Konvektionsöffnungen (307) unterbrochen ist, um eine Zirkulation eines Leichtgases (601) zu ermöglichen, und welche insbesondere einen mit Metalloxyden befüllten Getterbehälter (60) aufweist, um ein Leichtgas (601) aufnehmen und abgeben zu können.

13. Hochwärmedämmende Isolierverglasung nach einem der vorhergehenden Ansprüche, bei der die Außenschale (10) und die Innenschale (11) als Glasscheiben (100, 110) ausgebildet sind, bei der der transluzente Dämmstoffkörper (30) als fasergestützte Dämmstoffplatte (301) mit mindestens einer Schicht aus pyrogener Kieselsäure (31) ausgebildet ist, und bei der die fasergestützte Dämmstoffplatte (301) mit den Glasscheiben (100, 110) im Wesentlichen vollflächig mit einem glasklaren, flüssigen, durch UV-Licht aushärtenden Kleber (400) oder durch einen Silikonkleber (401) biege- und schubsteif verbunden ist, so dass ein statisch wirksames Verbundsandwich (40) entsteht.

14. Hochwärmedämmende Isolierverglasung nach einem der vorhergehenden Ansprüche, bei der die Außenschale (10) und die Innenschale (11) als Glasscheiben (100, 110) ausgebildet sind, bei der der transluzente Dämmstoffkörper (30) als fasergestützte Dämmstoffplatte (301) mit mindestens einer Schicht aus pyrogener Kieselsäure (31) ausgebildet ist, und bei der die fasergestützte Dämmstoffplatte (301) in einem thermischen Prozess mit den Glasscheiben (100, 110 bzw. 103, 113) verschweißt ist, wobei die Zuschlagstoffe (32) innerhalb der Dämmstoffplatte (301) untereinander verschmolzen sind, um innerhalb der Matrix aus pyrogener Kieselsäure (31) eine zusammenhängende interne Tragstruktur (302) zu bilden.

15. Hochwärmedämmende Isolierverglasung nach einem der vorhergehenden Ansprüche, bei der der Zwischenraum (20) zwischen der Außenschale (10) und der Innenschale (11) eine Edelgasfüllung (202) aufweist, und bei der eine Low-E-Beschichtung (200) vorgesehen ist, insbesondere an der inneren Oberfläche (2) der Außenschale (10).

16. Hochwärmedämmende Isolierverglasung nach einem der vorhergehenden Ansprüche, bei der der transluzente Dämmstoffkörper (30) als fasergestützte Dämmstoffplatte (301) mit mindestens einer Schicht aus pyrogener Kieselsäure (31) ausgebildet ist, bei der Zwischenraum (20) zwischen der Außenschale (10) und der Innenschale (11) ein Vakuum (203) aufweist, und bei der die fasergestützte Dämmstoffplatte (301) als drucksteifer Abstandhalter für die Scheiben (100, 110) dient.

17. Hochwärmedämmende Isolierverglasung nach einem der vorhergehenden Ansprüche, bei der der transluzente Dämmstoffkörper (30) als benetzungsempfindliche, fasergestützte Dämmstoffplatte (301) mit mindestens einer Schicht aus pyrogener Kieselsäure (31) ausgebildet ist, und bei der die Dämmstoffplatte (301) eine Randversiegelung in Form einer Imprägnierung (503), einer Beschichtung (504) oder einer Abdichtung (505) aufweist, um die Dämmstoffplatte (301) zu schützen.

18. Hochwärmedämmende Isolierverglasung nach einem der vorhergehenden Ansprüche, bei der der transluzente Dämmstoffkörper (30) als fasergestützte Dämmstoffplatte (301) mit mindestens einer Schicht aus pyrogener Kieselsäure (31) ausgebildet ist, und bei der die fasergestützte Dämmstoffplatte (301) einen Bereich (20) zwischen der Außenschale (10) und der Innenschale (11) nur abschnittsweise ausfüllt, wobei transparente Öffnungen vorgesehen sind.

19. Hochwärmedämmende Isolierverglasung nach einem der vorhergehenden Ansprüche, bei der im Zwischenraum (20) zwischen der Außenschale (10) und der Innenschale (11) Gefache aus Holz oder Kunststoff zum Einbringen transluzenter Dämmstoffkörper (30) mit regelmäßigen, modularen Abmessungen vorgesehen sind.

20. Hochwärmedämmende Isolierverglasung nach Anspruch 19, bei der der Dämmstoffkörper in Modulen ausgebildet ist, und bei der mindestens eine Oberfläche (2, 3) der Außenschale (10) und/oder der Innenschale (11) mit einem Raster bedruckt ist, um die Fugen zwischen den Modulen des transluzenten Dämmstoffkörpers (30) abzudecken.

21. Hochwärmedämmende Isolierverglasung nach einem der vorhergehenden Ansprüche, bei der die Außenschale (10) und die Innenschale (11) als gekrümmte Flächen ausgebildet sind, die einen gekrümmten Zwischenraum (20) zur Aufnahme eines gekrümmten, transluzenten Dämmstoffkörpers (30) definieren.

## Claims

1. A high-temperature insulating glazing, comprising:
a translucent or transparent outer shell (10),
a translucent or transparent inner shell (11),
a translucent insulating element (13), which is disposed between the outer shell (10) and the inner shell (11),
**characterised in that**
the translucent insulating element (30) comprises pyrogenic, light-permeable silicic acid (31).

2. The high-temperature insulating glazing according to claim 1, wherein the pyrogenic silicic acid (31) forms a matrix, in which daylight-sensitive filling substances (32) are embedded.

3. The high-temperature insulating glazing according to claim 2, wherein the daylight-sensitive filling substances (32) consist of inorganic material, in particular, glass fibres (320), micro-glass beads, hollow micro-glass beads (321) or rutile fibres (322).

4. The high-temperature insulating glazing according to claim 2 or 3,
wherein the daylight-sensitive filling substances (32) consist of organic material, in particular, translucent synthetic-material fibres (323) or porous, translucent synthetic-material elements (324).

5. The high-temperature insulating glazing according to any one of claims 2 to 4, wherein the matrix of pyrogenic silicic acid (31) provides an internal bearing structure (302), which is formed through welding or fusion of the filling substances (32).

6. The high-temperature insulating glazing according to any one of the preceding claims,
wherein the translucent insulating element (30) is formed as a pourable packing (300) or as a fibre-supported insulating panel (301) or as a multilayer composite panel (303) with at least one layer made of pyrogenic silicic acid (31).

7. The high-temperature insulating glazing according to any one of the preceding claims, wherein the pyrogenic silicic acid (31) is coloured with different translucent colours (330-339) by metallic oxides (33).

8. The high-temperature insulating glazing according to any one of the preceding claims, wherein the outer shell (10) and the inner shell (11) form an insulating glazing unit with edge connection (50),
wherein the edge connection (50) consists of a metal spacer with seal (500), a soldered edge connection (501), a soldered edge connection (501) with lead web or a welded, solid-glass edge connection (502).

9. The high-temperature insulating glazing according to any one of the preceding claims, wherein the outer shell (10) and the inner shell (11) are each formed as a transparent glass pane (100, 110) in the form of a float-glass pane, a laminated glass pane, a pre-stressed or partially-pre-stressed glass pane, as profiled building glass (101, 111), as a glass brick, as a transparent or translucent synthetic-material panel (103, 113) or as a hollow-cavity panel (104, 114).

10. The high-temperature insulating glazing according to any one of the preceding claims, wherein the translucent insulating element (30) is welded into a transparent synthetic-material film (34), so that it can be provided with a negative pressure (343) in a vacuum chamber.

11. The high-temperature insulating glazing according to claim 10, wherein the transparent synthetic-material film (34) surrounding the insulating element provides a vapour-deposited, infrared-reflecting layer (343).

12. The high-temperature insulating glazing according to any one of the preceding claims, wherein the translucent insulating element (30) is interrupted by channels (306) and convection apertures (307), in order to allow circulation of a light gas (601), and which, in particular, provides a getter container (60) filled with metallic oxides, in order to be able to absorb and release a light gas (601).

13. The high-temperature insulating glazing according to any one of the preceding claims,
wherein the outer shell (10) and the inner shell (11) are formed as glass panes (100, 110),
wherein the translucent insulating element (30) is formed as a fibre-supported insulating panel (301) with at least one layer of pyrogenic silicic acid (31), and
wherein the fibre-supported insulating panel (301) is connected substantially over its full-surface with a glass-clear, liquid adhesive (400) hardened by UV light or by a silicone adhesive (401) in a manner resistant to bending and impact, so that a statically-active composite sandwich (40) is formed.

14. The high-temperature insulating glazing according to any one of the preceding claims,
wherein the outer shell (10) and the inner shell (11) are formed as glass panes (100, 110),
wherein the translucent insulating element (30) is formed as a fibre-supported insulating panel (301) with at least one layer of pyrogenic silicic acid (31), and
wherein the fibre-supported insulating panel (301) is welded in a thermal process to the glass panes (100, 110 or respectively 103, 113), wherein the filling substances (32) within the insulating panel (301) are fused to one another, in order to form a coherent internal bearing structure (302) within the matrix of pyrogenic silicic acid (31).

15. High-temperature insulating glazing according to any one of the preceding claims, wherein the intermediate cavity (20) between the outer shell (10) and the inner shell (11) is filled with a noble gas (202), and wherein a low-E coating (200) is provided, in particular on the internal surface (2) of the outer shell (10).

16. The high-temperature insulating glazing according to any one of the preceding claims,
wherein the translucent insulating element (30) is formed as a fibre-supported insulating panel (301) with at least one layer of pyrogenic silicic acid (31),
wherein the intermediate cavity (20) between the outer shell (10) and the inner shell (11) provides a vacuum (203), and wherein the fibre-supported insulating panel (301) serves as a compression-resistant spacer for the plates (100, 110).

17. The high-temperature insulating glazing according to any one of the preceding claims,
wherein the translucent insulating element (30) is formed as a fibre-supported insulating panel (301) sensitive to wetting with at least one layer of pyrogenic silicic acid (31), and
wherein the insulating panel (301) provides an edge seal in the form of an impregnation (503), a coating (504) or a seal (505), in order to protect the insulating panel (301).

18. The high-temperature insulating glazing according to any one of the preceding claims,
wherein the translucent insulating element (30) is formed as a fibre-supported insulating panel (301) with at least one layer of pyrogenic silicic acid (31), and
wherein the fibre-supported insulating panel (301) fills out a region (20) between the outer shell (10) and the inner shell (11) only in portions,
wherein transparent apertures are provided.

19. The high-temperature insulating glazing according to any one of the preceding claims,
wherein, in the intermediate cavity (20) between the outer shell (10) and the inner shell (11) pockets of wood or synthetic material are provided for the introduction of translucent insulating elements (30) with regular, modular dimensions.

20. The high-temperature insulating glazing according to claim 19, wherein the insulating element is formed in modules, and wherein the at least one surface (2, 3) of the outer shell (10) and/or of the inner shell (11) is printed with a grid, in order to cover the joints between the modules of the translucent insulating element (30).

21. The high-temperature insulating glazing according to any one of the preceding claims, wherein the outer shell (10) and the inner shell (11) are formed as curved surfaces, which define a curved intermediate cavity (20) for the accommodation of a curved, translucent insulating element (30).

## Revendications

1. Vitrage isolant hautement calorifuge, qui comprend :
une coque extérieure (10) translucide ou transparente,
une coque intérieure (11) translucide ou transparente,
un corps de matériau calorifuge (30) translucide, qui est agencé entre la coque extérieure (10) et la coque intérieure (11),
**caractérisé en ce que** le corps de matériau calorifuge (30) translucide comporte de l'acide silicique pyrogéné (31) transparent à la lumière.

2. Vitrage isolant hautement calorifuge selon la revendication 1, dans lequel l'acide silicique pyrogéné (31) forme une matrice dans laquelle sont logés des additifs (32) actifs sur le plan technique de la lumière du jour.

3. Vitrage isolant hautement calorifuge selon la revendication 2, dans lequel les additifs (32) actifs sur le plan technique de la lumière du jour sont constitués de matière inorganique, notamment de fibres de verre (320), de microbilles de verre, de microbilles de verre creuses (321) ou de fibres de rutile (322).

4. Vitrage isolant hautement calorifuge selon la revendication 2 ou la revendication 3, dans lequel les additifs (32) actifs sur le plan technique de la lumière du jour sont constitués de matière organique, notamment de fibres de matière synthétique (323) translucides, ou de corps de matière synthétique (324) translucides, poreux.

5. Vitrage isolant hautement calorifuge selon l'une des revendications 2 à 4, dans lequel la matrice d'acide silicique pyrogéné (31) présente une structure porteuse interne (302) qui est formée par soudage ou fusion réciproque des additifs (32).

6. Vitrage isolant hautement calorifuge selon l'une des revendications précédentes, dans lequel le corps de matériau calorifuge (30) translucide est réalisé en tant que produit granuleux (300) pouvant s'écouler librement, ou bien en tant que plaque de matériau calorifuge armée de fibres (301), ou bien encore en tant que plaque composite à couches multiples (303) avec au moins une couche d'acide silicique pyrogéné (31).

7. Vitrage isolant hautement calorifuge selon l'une des revendications précédentes, dans lequel l'acide silicique pyrogéné (31) est coloré par des oxydes métalliques (33) avec des couleurs translucides différentes (330-339).

8. Vitrage isolant hautement calorifuge selon l'une des revendications précédentes, dans lequel la coque extérieure (10) et la coque intérieure (11) forment une unité de verre isolant avec une liaison de bordure (50), la liaison de bordure (50) étant constituée par une entretoise métallique avec scellage (500), par une liaison de bordure brasée (501), par une liaison de bordure brasée (501) avec nervure de plomb, ou par une liaison de bordure soudée entièrement en verre (502).

9. Vitrage isolant hautement calorifuge selon l'une des revendications précédentes, dans lequel la coque extérieure (10) et la coque intérieure (11) sont réalisées chacune en tant que vitre de verre transparente (100, 110) sous la forme d'une vitre de verre flotté, d'une vitre de verre de sécurité feuilleté, d'une vitre de verre trempé ou partiellement trempé, en tant que profilé de verre de construction (101, 111), en tant que brique de verre, en tant que plaque de matériau synthétique (103, 113) transparente ou translucide, ou en tant que plaque à alvéoles creuses (104, 114).

10. Vitrage isolant hautement calorifuge selon l'une des revendications précédentes, dans lequel le corps de matériau calorifuge (30) translucide est enfermé par soudage dans un film transparent de matière plastique (34), de sorte qu'il est possible de le mettre en dépression dans une chambre à vide.

11. Vitrage isolant hautement calorifuge selon la revendication 10, dans lequel le film transparent de matière plastique (34) enveloppant le corps de matériau calorifuge, comporte une couche (343) appliquée par vaporisation, qui réfléchit les infrarouges.

12. Vitrage isolant hautement calorifuge selon l'une des revendications précédentes, dans lequel le corps de matériau calorifuge (30) translucide est interrompu par des canaux (306) et des ouvertures de convection (307) pour permettre une circulation d'un gaz léger (601), et qui présente notamment un récipient formant piège à gaz ou getter (60) rempli d'oxydes métalliques, en vue de pouvoir absorber et délivrer un gaz léger (601).

13. Vitrage isolant hautement calorifuge selon l'une des revendications précédentes,
dans lequel la coque extérieure (10) et la coque intérieure (11) sont réalisées en tant que vitres de verre (100, 110),
dans lequel le corps de matériau calorifuge (30) translucide est réalisé en tant que plaque de matériau calorifuge armée de fibres (301) avec au moins une couche d'acide silicique pyrogéné (31), et
dans lequel la plaque de matériau calorifuge armée de fibres (301) est reliée aux vitres de verre (100, 110) sensiblement sur toute la surface, de manière rigide en flexion et au cisaillement, par une colle (400) liquide, claire comme le verre, durcissant à la lumière UV, ou bien par une colle aux silicones (401), de sorte qu'il en résulte un composite en sandwich (40) effectivement statique.

14. Vitrage isolant hautement calorifuge selon l'une des revendications précédentes,
dans lequel la coque extérieure (10) et la coque intérieure (11) sont réalisées en tant que vitres de verre (100, 110),
dans lequel le corps de matériau calorifuge (30) translucide est réalisé en tant que plaque de matériau calorifuge armée de fibres (301) avec au moins une couche d'acide silicique pyrogéné (31), et
dans lequel la plaque de matériau calorifuge armée de fibres (301) est soudée aux vitres de verre (100, 110 respectivement 103, 113) lors d'un processus thermique, les additifs (32) étant fusionnés mutuellement à l'intérieur de la plaque de matériau calorifuge (301), en vue de former à l'intérieur de la matrice d'acide silicique pyrogéné (31), une structure interne porteuse (302) continue.

15. Vitrage isolant hautement calorifuge selon l'une des revendications précédentes,
dans lequel l'espace intermédiaire (20) entre la coque extérieure (10) et la coque intérieure (11) présente un remplissage de gaz rare (202), et
dans lequel il est prévu un revêtement de faible émissivité ou revêtement Low-E (200), notamment sur la surface intérieure (2) de la coque extérieure (10).

16. Vitrage isolant hautement calorifuge selon l'une des revendications précédentes,
dans lequel le corps de matériau calorifuge (30) translucide est réalisé en tant que plaque de matériau calorifuge armée de fibres (301) avec au moins une couche d'acide silicique pyrogéné (31),
dans lequel l'espace intermédiaire (20) entre la coque extérieure (10) et la coque intérieure (11) présente un vide (203), et
dans lequel la plaque de matériau calorifuge armée de fibres (301) sert d'entretoise rigide en compression pour les vitres (100, 110).

17. Vitrage isolant hautement calorifuge selon l'une des revendications précédentes,
dans lequel le corps de matériau calorifuge (30) translucide est réalisé en tant que plaque de matériau calorifuge armée de fibres (301) sensible à l'humidification, avec au moins une couche d'acide silicique pyrogéné (31), et
dans lequel la plaque de matériau calorifuge (301) présente un scellage de bordure sous la forme d'une imprégnation (503), d'un revêtement (504) ou d'une étanchéité (505), en vue de protéger la plaque de matériau calorifuge (301).

18. Vitrage isolant hautement calorifuge selon l'une des revendications précédentes,
dans lequel le corps de matériau calorifuge (30) translucide est réalisé en tant que plaque de matériau calorifuge armée de fibres (301) avec au moins une couche d'acide silicique pyrogéné (31), et
dans lequel la plaque de matériau calorifuge armée de fibres (301) ne remplit que de manière partielle par tronçons une zone (20) entre la coque extérieure (10) et la coque intérieure (11), des ouvertures transparentes étant prévues.

19. Vitrage isolant hautement calorifuge selon l'une des revendications précédentes, dans lequel dans l'espace intermédiaire (20) entre la coque extérieure (10) et la coque intérieure (11) sont prévues des cases en bois ou en matière plastique pour y insérer des corps de matériau calorifuge (30) translucides de dimensions modulaires, régulières.

20. Vitrage isolant hautement calorifuge selon la revendication 19,
dans lequel le corps de matériau calorifuge est réalisé en modules, et
dans lequel au moins une surface (2, 3) de la coque extérieure (10) et/ou de la coque intérieure (11) est imprimée avec un quadrillage, en vue de couvrir les interstices de joint entre les modules du corps de matériau calorifuge (30) translucide.

21. Vitrage isolant hautement calorifuge selon l'une des revendications précédentes, dans lequel la coque extérieure (10) et la coque intérieure (11) sont réalisées sous la forme de surfaces courbes, qui définissent un espace intermédiaire (20) courbe destiné à recevoir un corps de matériau calorifuge (30) translucide, courbe.
